Europäisches Patentamt

European Patent Office

Office européen des brevets

(19)

(11) Veröffentlichungsnummer: **0 267 503 B1**

(12) **EUROPÄISCHE PATENTSCHRIFT**

(45) Veröffentlichungstag der Patentschrift: **28.10.92**

(51) Int. Cl.⁵: **B60N 2/48**

(21) Anmeldenummer: **87115981.0**

(22) Anmeldetag: **30.10.87**

(54) **Kopfstütze für Kraftfahrzeugsitze.**

(30) Priorität: **30.10.86 DE 3636931**

(43) Veröffentlichungstag der Anmeldung:
**18.05.88 Patentblatt 88/20**

(45) Bekanntmachung des Hinweises auf die
Patenterteilung:
**28.10.92 Patentblatt 92/44**

(84) Benannte Vertragsstaaten:
**AT DE ES FR GB IT SE**

(56) Entgegenhaltungen:
**DE-A- 3 436 540**
**DE-A- 3 437 803**

(73) Patentinhaber: **Butz, Eugen Otto**
**Krabbenburg 3**
**W-4010 Hilden(DE)**

(72) Erfinder: **Butz, Eugen Otto**
**Krabbenburg 3**
**W-4010 Hilden(DE)**

(74) Vertreter: **Ostriga, Harald, Dipl.-Ing. et al**
**Patentanwälte Dipl.-Ing. Harald Ostriga**
**Dipl.-Ing. Bernd Sonnet Stresemannstrasse**
**6-8**
**W-5600 Wuppertal 2(DE)**

Rank Xerox (UK) Business Services

## Beschreibung

Die Erfindung betrifft eine Kopfstütze für Kraftfahrzeugsitze, wie sie durch die DE-A-3 437 803 bekanntgeworden ist.

Die bekannte Kopfstütze weist zwei in die Oberseite einer Kraftfahrzeug-Sitzlehne eingreifende und in letzterer verankerte Arretierhülsen auf. In jeder Arretierhülse ist das untere Einsteckende einer Tragstange aufgenommen und lösbar befestigt. Sitzlehnenoberseitig weist die Arretierhülse einen Kragen auf, welcher etwa schubladenartig eine Entriegelungstaste aufnimmt, innerhalb welcher die freien Enden eines U-förmigen Rahmens befestigt sind, der die Tragstange umgreift und mit der Innenseite seines Raststeges in eine Rastkerbe eingreift. Wenn die Tragstange aus der Arretierhülse gelöst werden soll, drückt man entgegen der Kraft einer Rückstellfeder auf die Entriegelungstaste, so daß der Raststeg mit einer translatorischen Bewegung außer Eingriff mit der Rastkerbe gerät und die den Polsterträger haltende Tragstange aus der Arretierhülse nach oben herausgezogen werden kann.

Ausgehend von der bekannten Kopfstütze gemäß der DE-A-3 437 803, liegt der Erfindung die Aufgabe zugrunde, die Tragstangen der bekannten Kopfstütze im Sichtbereich rastkerbenfrei zu gestalten, sodaß sich im Zusammenwirken zwischen Arretierhülse und Tragstange zusätzliche vorteilhafte Anwendungsmöglichkeiten ergeben.

Diese Aufgabe wurde erfindungsgemäß entsprechend dem Kennzeichenteil des Patentanspruchs 1 gelöst.

Die Erfindung sieht vor, den Raststeg dem unteren Axialbereich der Arretierhülse zuzuordnen und über ein Antriebsgestänge mit der sitzlehnenoberseitig angeordneten Entriegelungstaste zu kuppeln. Hierdurch ist es möglich geworden, die Kraftflußverhältnisse beim Übertritt von tragstangenseitig übertragenen Querkräften unter Aufrechterhaltung einer leichten Bedienbarkeit, und zwar durch die gut zugängliche Entriegelungstaste an der Sitzlehnenoberseite, neu zu gestalten.

Während nämlich der obere Bereich der erfindungsgemäßen Arretierhülse überwiegend der Aufnahme von Querkräften vorbehalten sein kann, werden die in Längsrichtung der Tragstange wirkenden Axialkräfte im unteren Axialbereich der Arretierhülse, nämlich dort wo der Raststeg angeordnet ist, aufgenommen.

Ein weiterer erfindungsgemäßer Vorteil besteht darin, daß der obere Bereich der Arretierhülse nun als Gleitführungsbereich bei der Höhenverstellung des Tragstangen-Systems verwendet werden kann, ohne daß ein Raststeg-Eingriff in diesem Bereich stören könnte. Dies kann z.B. dadurch geschehen, daß eine rastkerbenfreie Tragstangenumhüllung im oberen Bereich der Arretierhülse höhenverstellbar angeordnet oder daß eine nicht ummantelte Tragstange sitzlehnenseitig verstellbar ist. Im letzteren Falle wäre der zwischen der Unterseite des Kopfpolsterkörpers und der Sitzlehnenoberseite sichtbare Bereich der Tragstange ebenfalls rastkerbenfrei, da die für eine unterschiedliche Höhenpositionierung vorgesehenen tragstangenseitigen Rastkerben dem unteren Bereich der Arretierhülse zugeordnet sind, also niemals in den sichtbaren Bereich oberhalb der Sitzlehnenoberseite gelangen.

Eine kompakte einheitliche Bauform der Arretierhülse ist in weiterer Ausgestaltung der Erfindung dadurch gegeben, daß das Antriebsgestänge arretierhülsenseitig gelagert ist.

Eine besonders vorteilhafte Ausführungsform entsprechend der Erfindung besteht darin, daß der Raststeg zwei Betätigungsschenkel eines des Antriebsgestänge bildenden U-förmigen Sperrbügels miteinander verbindet, dessen Betätigungsschenkel-Enden mit der Entriegelungstaste bewegungsgekuppelt sind. In zusätzlicher Ausgestaltung der Erfindung sind die beiden Betätigungsschenkel an diametral gegenüberliegenden Stellen der Arretierhülse angeordnet und bilden jeweils eine sich im wesentlichen längs der Arretierhülse erstreckenden zweiarmigen Hebel, der zwischen Raststeg und Entriegelungstaste arreitierhülsenseitig gelagert ist. Durch die vorgenannten Erfindungsmerkmale ergibt sich eine baulich einfache, kompakte und funktionssichere Anordnung zur Entriegelung zwischen Raststeg und Tragstange.

Von einer nicht zur engeren Gattung zählenden Tragstangen-Endlagensicherung einer anderen Kopfstütze (DE-A-3 436 540) sind ein bezüglich der Tragstange oberer Betätigungshebel und ein unterer Rasthebel vorbekannt. Während aber die Bauweise dieses bekannten Gegenstandes gegliedert, insbesondere keine dem Erfindungsgegenstand vergleichbare Arretierhülse zur Aufnahme des unteren Einsteckbereichs der Tragstange vorhanden ist, gestattet die Erfindung eine montagegünstige kompakte Bauform.

Weitere Erfindungsmerkmale sind in zusätzlichen Unteransprüchen enthalten.

In den Zeichnungen ist ein bevorzugtes Ausführungsbeispiel entsprechend der Erfindung näher dargestellt, es zeigen

Fig. 1 einen Vertikalschnitt durch eine erfindungsgemäße Kopfstütze für Kraftfahrzeugsitze mit angedeuteter Sitzlehne (in etwas verkleinerter Darstellung); die Kopfstütze nimmt ihre maximale Höhen-Einstellposition ein,

Fig. 2 die Seitenansicht einer Arretierhülse mit eingesetztem unteren Einsteckbereich einer Trangstange, teilweise im Axialschnitt, und

Fig. 3 eine räumliche Darstellung eines Uförmigen Antriebsgestänges.

Die Kopfstütze 10 weist einen von einem Polsterkörper 11 umgebenen Polsterträger 12 auf, welcher mittels zweier Tragstangen 13 (nur eine ist sichtbar) an einer auf der Tragstange 13 gleit- und feststellbaren Führungshülse 14 gehalten ist.

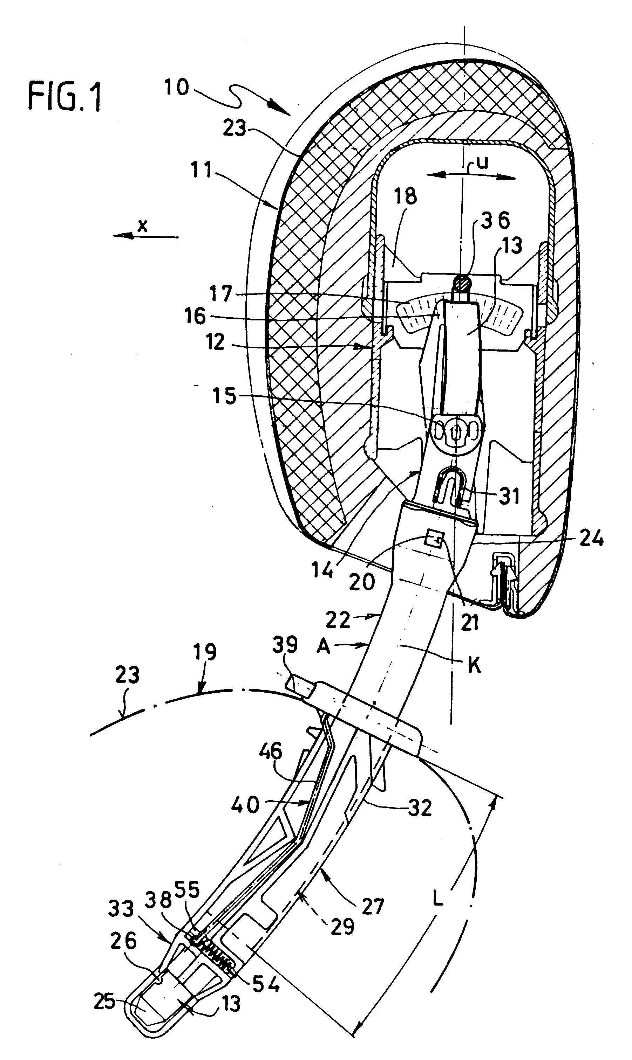

Jede Führungshülse 14 ist mit zwei quer zur Fahrtrichtung x beiderseits vorstehenden Drehlagerzapfen 15 (nur einer ist in Fig. 1 sichtbar) versehen, welche in nicht dargestellte Lageröffnungen des Polsterträgers 12 eingreifen. Auf diese Weise ist der Polsterträger 12 mitsamt dem Polsterkörper 11 entlang dem mit u bezeichneten Doppelpfeil schwenk- bzw. neigeverstellbar. Zur Arretierung der Neigestellung dient ein Rastsystem, und zwar ein Rastfinger 16 der Führungshülse 14 und ein beispielsweise aus Federstahl bestehendes Rastsegment 17, welches jeweils innenseitig einer Seitenwange 18 des Polsterträgers 12 befestigt ist.

An ihrem jeweils der Sitzlehne 19 zugewandten unteren Endbereich ist eine jede Führungshülse 14 mit zwei quer zur Fahrtrichtung x seitlich vorstehenden Rastnocken 20 versehen, welche in je eine Rastaussparung 21 im oberen Endbereich 24 eines Fortsatzes 22 praktisch unlösbar eingreifen. Es besteht so eine zug- und druckfeste Verbindung zwischen Führungshülse 14 und Fortsatz 22. Rastaussparungen 21 und Rastnocken 20 sind an diametral gegenüberliegenden Umfangsstellen der Teile 22, 14 angeordnet.

Die Führungshülse 14 besteht aus einem bruchfesten glasfaserverstärkten Kunststoff und stellt insgesamt ein hart-zähes Spritzgußteil dar. Der Fortsatz 22 bildet ebenso wie die Führungshülse 14 ein Kunststoffspritzgußteil aus widerstandsfähigem Werkstoff, braucht jedoch nicht glasfaserarmiert zu sein. Die nach außen weisende Oberfläche des Fortsatzes 22 kann dem textilen Bezugsstoff 23 der Kopfstütze 10 bzw. der Sitzlehne 19 farblich angepaßt und mit einer strukturierten, z.B. lederartig genarbten, Oberfläche versehen sein.

Der Fortsatz 22 stellt ein von der Führungshülse 14 gesondertes Bauteil dar und übergreift den unteren Endbereich der Führungshülse 14 steckmuffenartig (und zwar biegesteif) mit seinem oberen Bereich 24.

Da die Außenkontur des Querschnittes im unteren Bereich der Führungshülse 14 und die Innenkontur im Bereich 24 des Fortsatzes 22 gemeinsam eine steckschlüsselartig ineinandergreifende Überlappungszone ergeben, besteht zwischen der Führungshülse 14 und dem Fortsatz 22 nicht nur eine zug-, druck und biegefeste Rastverbindung 20, 21, sondern zusätzlich noch eine drehfeste Verbindung bezüglich der Längsmittelachsen K.

Die Tragstange 13 ist mit ihrem unteren Ende 25 über eine lösbare Rastverbindung mittels einer Tragstangen-Rastkerbe 26 zug- und druckfest mit dem unteren Bereich 33 einer Arretierhülse 27 verbunden, welche über eine Federrastzunge 41 und Rasthaken 42 in der nicht gezeigten Sitzlehnen-Tragkonstruktion verankert ist. Die Verbindung zwischen Arretierhülse 27 und Tragstange 13 ist wie folgt gestaltet:

Ein Raststeg 38 eines mittels einer Taste 39 lösbaren Antriebsgestänges in Gestalt eines Sperrbügels 40 greift in die obere Rastkerbe 26 der Tragstange 13 ein. Die obere Rastkerbe 26 gleicht übrigens der aus Sicherheitsgründen vorgesehenen zusätzlichen untersten Rastkerbe 26.

Die Tragstange 13 durchsetzt ansonsten den rohrartigen Fortsatz 22 und ist dort an nicht gezeigten axialen Gleitführungsrippen im wesentlichen spielfrei geführt.

Wie bereits weiter oben erwähnt, ist die Führungshülse 14 auf der Tragstange 13 gleitverschieblich angeordnet. Eine lösbare Höhenarretierung zwischen Führungshülse 14 und raumfest in der Sitzlehne 19 gehaltener Tragstange 13 erfolgt über einen Rastfederschenkel 31 an der Führungshülse 14, welcher mit nicht dargestellten tragstangenseitigen Rast- und Verstellkerben zusammenwirkt.

Bei der Veränderung der Höhenlage (z.B. Höherstellen der Kopfstütze 10) ist der untere Bereich 29 des Fortsatzes 22 je nach Höhenlage stets mit einem mehr oder weniger großen axialen Längenbereich L wie ein Innenteleskoprohr in der Höhlung die Arretierhülse 27 aufgenommen und dort gleitgeführt. Hierbei ist die äußere Querschnittskontur des Fortsatzes 22 unrund. Die innere Querschnittskontur im oberen Bereich 32 der Arretierhülse 27, also dem Teleskopbereich zwischen dem Fortsatz 22 und der Arretierhülse 27, ist ebenfalls korrespondierend unrund.

Es ergibt sich so eine Gleitführung zwischen der Außenmantelfläche A des Fortsatzes 22 und der nicht gezeigten Innenmantelfläche der Arretierhülse 27, welche aufgrund ihrer korrespondierenden unrunden Ausbildung zugleich eine drehfeste Verbindung zwischen dem Fortsatz 22 und der Arretierhülse 27 ergibt.

Auf diese Weise ist vorstellbar, daß auf die Kopfstütze 10 einwirkende Kräfte (z.B. entgegen der Fahrtrichtung x) sowohl hinsichtlich ihrer Querkraftkomponente als auch hinsichtlich ihrer Torsionskomponente sicher im Gleitbereich zwischen dem Fortsatz 22 und der Arretierhülse 27, also im oberen Bereich 32 der Arretierhülse 27, übertragen werden können. Die Sicherung gegen Axialverschiebung der Tragstange 13 hingegen, und zwar zwischen dem Raststeg 38 und der Rastkerbe 26, vollzieht sich im unteren Arretierhülsenbereich 33.

Es wird nun auch deutlich, daß der Fortsatz 22 eine formsteife Brücke zwischen einer jeden Führungshülse 14 und einer jeden Arretierhülse 27 bildet. Diese Brücke ist in der Lage, Torsionskräft zu übertragen. In diesem Zusammenhang wäre es selbstverständlich auch vorstellbar, zur Erzielung einer Torsionskraftübertragung zwischen Tragstange 13 und Fortsatz 22 zusätzlich auch die Tragstange 13 mit einem unrunden Querschnitt zu versehen.

Beide Tragstangen 13 sind über einen Kopfbügel 36 in einem definierten Abstand zueinander gehalten und zugleich auch durch diesen gegen Torsion um ihre Längsachsen K gesichert.

Anhand von Fig. 1 wird, bei Betrachtung der strichpunktierten und mit K bezeichnten Linie deutlich, daß die Mittellängsachsen der Führungshülse 14, der Tragstange 13, des Fortsatzes 22 und der Arretierhülse 27 einem gemeinsamen Kreisbogen, nämlich dem Kreisbogen K, folgen. Auf diese Weise ist eine ungehinderte Relativbewegung zwischen den Tragstangen 13 und den Fortsätzen 22 einerseits sowie zwischen den Fortsätzen 22 und den Arretierhülsen 27 andererseits möglich.

Selbstverständlich ist es grundsätzlich auch möglich, die Führungshülsen 14, die Tragstangen 13, die Fortsätze 22 und die Arretierhülsen 27 hinsichtlich ihrer Längsmittelachsen gradlinig auszubilden.

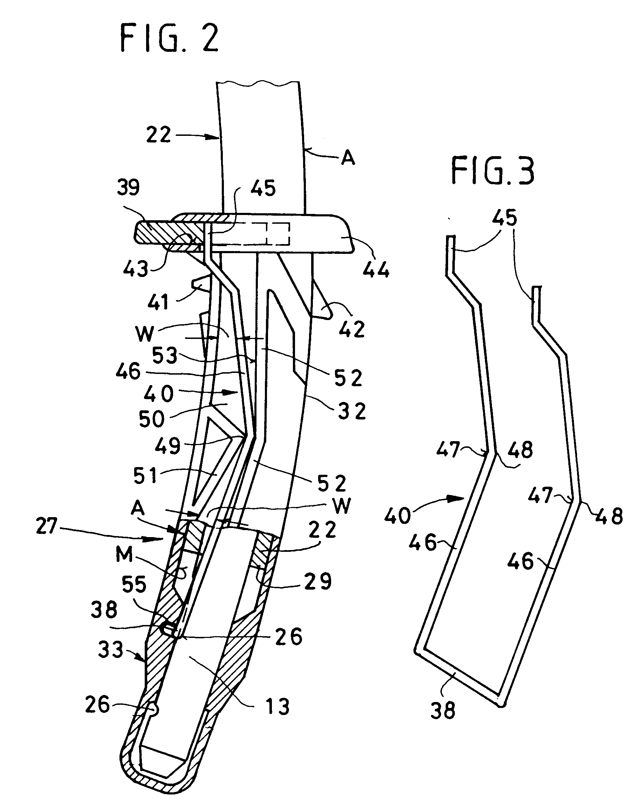

Die Taste 39 ist im sitzlehnenoberseitigen Kopf 44 der Arretierhülse 27 etwa schubladenartig in einer Radialausnehmung 43 geführt und mit den freien Enden 45 des insgesamt U-förmigen sperrbügelartigen Antriebsgestänges 40 (vgl. Fig. 3) lediglich druckfest bewegungsgekuppelt. Die beiden Betätigungsschenkel 46 des Sperrbügels 40 sind an diametral gegenüberliegenden Stellen der Arretierhülse 27 angeordnet und bilden einen sich im wesentlichen längs der Arretierhülse 27 erstreckenden zweiarmigen Hebel, der zwischen Raststeg 38 und Entriegelungstaste 39 schwenkgelagert ist.

Jeder Betätigungsschenkel 46 ist abgeknickt und mit der Hohleite 47 seiner Knickstelle 48 jeweils auf einer Lagerschneide 49 schwenkbar gelagert. Jeder Betätigungsschenkel 46 erstreckt sich hierbei außen längs der Arretierhülse 27, und zwar innerhalb einer etwa radial nach außen offenen Nut 50 zwischen zwei Längsrippen 51, 52. Die stärker abgeknickte Längsrippe 51 bildet an ihrer erhabenen Seite mit ihrem Scheitelpunkt die Lagerschneide 49 und die weniger abgeknickte Längstippe 52 mit ihrer Hohlseite 53 ein Widerlager für jeweils einen Betätigungsschenkel 46. Der nutartige Kanal 50 divergiert in seiner Umfangsweite W, ausgehend von der Lagerschneide 49, in Anpassung an die Schwenkbewegung der Betätigungsschenkel 46 sowohl zur Entriegelungstaste 39 als auch zum Raststeg 38 hin. Es bleibt noch zu erwähnen, daß der Raststeg 38 mittels einer irgendwie gearteten Feder, beispielsweise mittels einer oder zweier Zugfedern 54, in seiner Verriegelungsposition mit der tragstangenseitigen Rastkerbe 26 gehalten ist. Eine Axialsicherung (in Richtung der Längsmittelachse K) des Raststeges 38 ist dadurch gegeben, daß dieser innerhalb einer die Arretierhülse 27 radial durchsetzenden Aufnahmetasche 55 hin- und her schwenkbeweglich gelagert ist.

**Patentansprüche**

1. Kopfstütze (10) für Kraftfahrzeugsitze mit einem von einem Polster umgebenen Polsterträger (12), welcher an mindestens einer Tragstange (13) gehalten ist, die mit ihrem unteren Einsteckbereich in einer innerhalb einer Sitzlehne verankerten Arretierhülse (27) aufgenommen ist, welche zur Arretierung der Tragstange (13) in einer bestimmten axialen Höhenlage einen Raststeg (38) aufweist, der in eine tragstangenseitige Rastkerbe (26) eingreift, wobei die Arretierhülse (27) sitzlehnenoberseitig eine mit dem Raststeg (38) bewegungsgekuppelte Entriegelungstaste (39) aufweist, dadurch gekennzeichnet, daß der Raststeg (38) dem unteren Axialbereich (33) der Arretierhülse (27) zugeordnet und Bestandteil eines U-förmigen Sperrbügels (40) ist, daß der Raststeg (38) zwei Betätigungsschenkel (46) des U-förmigen Sperrbügels (40) miteinander verbindet, dessen Betätigungsschenkel-Enden (45) mit der Entriegelungstaste (39) bewegungsgekuppelt sind, und daß die beiden Betätigungsschenkel (46) an diametral gegenüberliegenden Stellen der Arretierhülse (27) angeordnet sind und jeweils einen sich im wesentlichen längs der Arretierhülse (27) erstreckenden zweiarmigen Hebel bilden, der zwischen Raststeg (38) und Entriegelungstaste (39) arretierhülsenseitig (bei 49) gelagert ist.

2. Kopfstütze nach Anspruch 1, dadurch gekennzeichnet, daß jeder Betätigungsschenkel (46) sich außen längs der Arretierhülse (27) erstreckt.

3. Kopfstütze nach Anspruch 1 oder nach Anspruch 2, dadurch gekennzeichnet, daß jeder Betätigungsschenkel (46) in einem sich längs der Arretierhülse (27) erstreckenden Kanal (50) aufgenommen ist, dessen Umfangsweite (W), ausgehend von der arretierhülsenseitigen Lagerung (49), in Anpassung an die Schwenkbewegung der Betätigungsschenkel (46) sowohl zur Entriegelungstaste (39) als auch zum Raststeg (38) hin divergiert.

4. Kopfstütze nach Anspruch 3, dadurch gekennzeichnet, daß die arretierhülsenseitige Lagerung von einer Lagerschneide (49) gebildet ist.

5. Kopfstütze nach Anspruch 4, dadurch gekennzeichnet, daß der Aufnahmekanal für jeden Betätigungsschenkel (46) von einer etwa radial nach außen offenen Nut (50) zwischen zwei Längsrippen (51, 52) gebildet ist, deren eine stärker abgeknickte Längsrippe (51) an ihrer erhabenen Seite in ihrem Scheitelpunkt die Lagerschneide (49) und deren weniger abgeknickte Längsrippe (52) mit ihrer Hohlseite (53) ein Widerlager bildet.

6. Kopfstütze nach einem der Ansprüche 1 bis 5, dadurch gekennzeichnet, daß jeder Betätigungsschenkel (46) abgeknickt ist und mit der Hohlseite (47) seiner Knickstelle (48) auf der Lagerschneide (49) lagert.

7. Kopfstütze nach einem der Ansprüche 1 bis 6, dadurch gekennzeichnet, daß die der Entriegelungstaste (39) benachbarten beiden Enden (45) der Betätigungsschenkel (46) und die Entriegelungstaste (39) lediglich druckfest miteinander gekuppelt sind.

## Claims

1. A headrest (10) for motor vehicle seats comprising a cushion support (12), which is surrounded by a cushion and is held on at least one supporting rod (13) accommodated with its lower insertion region in a locking sleeve (27), which is anchored in a seat back and for locking the supporting rod (13) in a given axial position comprises a locking web (38) engaging in a locking groove (26) on the supporting rod, the locking sleeve (27) comprising on the seat back upper side a releasing button (39) movably coupled with the locking web (38), characterised in that the locking web (38) is associated with the lower axial region (33) of the locking sleeve (27) and forms part of a U-shaped clamping bracket (40), the locking web (38) connects two operating limbs (46) of the U-shaped clamping bracket (40) with one another, whose operating limb ends (45) are movably coupled with the releasing button (46), and the two operating limbs (46) are arranged on diametrally opposed points of the locking sleeve (27) and in each case form a double-arm lever extending substantially along the locking sleeve (27) and mounted on the locking sleeve (at 49) between the locking web (38) and the releasing button (39).

2. A headrest according to claim 1, characterised in that each operating limb (46) extends on the outside along the locking sleeve (27).

3. A headrest according to claim 1 or claim 2, characterised in that each operating limb (46) is accommodated in a duct (50) extending along the locking sleeve (27), the circumferential width (W) of said duct, proceeding from the bearing (49) on the locking sleeve, diverging in the direction of both the releasing button (39) and the locking web (38) in order to accommodate the pivoting movement of the operating limb (46).

4. A headrest according to claim 3, characterised in that the bearing on the locking sleeve is formed by a fulcrum edge (49).

5. A headrest according to claim 4, characterised in that the accommodating duct for each operating limb (46) is formed by an approximately radially outwardly opening groove (50) between two longitudinal ribs (51, 52), of which the more sharply bent longitudinal rib (51) forms the fulcrum edge (49) at its apex on its raised side and of which the less sharply bent longitudinal rib (52) forms an abutment with its hollow side (53).

6. A headrest according to one of claims 1 to 5, characterised in that each operating limb (46) is bent at an angle and is mounted with the hollow side (47) of its bending site (48) on the fulcrum edge (49).

7. A headrest according to one of claims 1 to 6, characterised in that the two ends (45) of the operating limbs (46) adjacent the releasing button (39) and said releasing button (39) are coupled with one another solely in a pressure-resistant manner.

## Revendications

1. Appuie-tête (10) pour sièges de véhicules automobiles, comprenant un support de coussin (12) enveloppé d'un coussin et maintenu au moyen d'au moins une tige porteuse (13) qui est logée par sa région d'emmanchement inférieure dans un manchon d'arrêt (27) ancré à l'intérieur du dossier, qui présente, pour arrêter la tige porteuse (13) dans une position axiale en hauteur déterminée, une barrette de verrouillage (38) qui s'engage dans une encoche de verrouillage (26) portée par la tige porteuse, le manchon d'arrêt (27) présentant, dans la région du bord supérieur du dossier du siège, une touche de déverrouillage (39) qui est accouplée cinématiquement à la barrette de verrouillage (38), caractérisé en ce que la barrette d'arrêt (38) est associée à la région axiale inférieure (33) du manchon d'arrêt (27) et fait partie d'un étrier de blocage (40) en forme de U, en ce que la barrette de verrouillage (38) relie l'une à l'autre deux branches d'actionnement (46) de l'étrier de blocage (40) en forme de U, dont les extrémités (45) des branches d'actionnement sont couplées cinématiquement à la touche de déverrouillage (39), et en ce que les deux branches d'actionnement (46) sont disposées en des zones diamétralement opposées du manchon d'arrêt (27), et forment chacune un levier à deux bras s'étendant sensiblement selon la longueur du manchon d'arrêt (27), qui est monté pivotant sur le manchon d'arrêt (en 49) entre la barrette de verrouillage (38) et la touche de déverrouillage (39).

2. Appuie-tête selon la revendication 1, caractérisé en ce que chaque branche d'actionnement (46) s'étend à l'extérieur le long du manchon d'arrêt (27).

3. Appuie-tête selon la revendication 1 ou selon la revendication 2, caractérisé en ce que chaque branche d'actionnement (46) est logée dans un canal (50) s'étendant le long du manchon d'arrêt (27), dont la largeur circonférentielle (W) diverge, aussi bien vers la touche de déverrouillage (39) que vers la barrette de verrouillage (38) à partir du point d'articulation (49) solidaire du manchon d'arrêt, pour s'adapter au mouvement de pivotement des branches d'actionnement (46).

4. Appuie-tête selon la revendication 3, caractérisé en ce que l'articulation sur le manchon d'arrêt est formée par un couteau de portée (49).

5. Appuie-tête selon la revendication 4, caractérisé en ce que le canal qui reçoit chaque branche d'actionnement (46) est formé par une rainure (50) s'ouvrant à peu près radialement vers l'extérieur, située entre deux nervures longitudinales (51, 52) dont une nervure longitudinale (51) plus fortement coudée forme le couteau de portée (49) sur son côté saillant, à son sommet, et dont la nervure longitudinale (52) moins fortement coudée, forme un appui par son côté concave (53).

6. Appuie-tête selon une des revendications 1 à 5, caractérisé en ce que chaque branche d'actionnement (46) est coudée et s'articule sur le couteau de portée (49) par le côté concave (47) de son coude (48).

7. Appuie-tête selon une des revendications 1 à 6, caractérisé en ce que les deux extrémités (45) des branches d'actionnement (46) qui sont adjacentes à la touche de déverrouillage (39) et la touche de déverrouillage (39) sont accouplées l'une à l'autre uniquement par une liaison travaillant à la pression.

FIG.1

# FIG. 2

# FIG.3